# FASCICULE DE BREVET EUROPEEN

(11) **EP 2 107 181 B1**
(45) Date de publication et mention de la délivrance du brevet: **27.09.2017**
(21) Numéro de dépôt: 09156923.6
(22) Date de dépôt: 31.03.2009
(51) Int. Cl.: E04F 13/08, E04B 9/20, F16B 37/08, F16B 15/00, F16B 35/04

(54) **Dispositif de support d'ossature de parement d'un bâtiment**
Stützvorrichtung für das Tragwerk einer Gebäudeverkleidung
Device for supporting the framework of a building facing

(30) Priorité: 31.03.2008 FR 0801749
(43) Date de publication de la demande: 07.10.2009
(73) Titulaire: Electricité de France, 75008 Paris (FR)
(72) Inventeur: Milleville, Pierre-Henri, 77250 Vernou La Celle (FR); Duforestel, Thierry, 77250 Moret Sur Loing (FR); Dalicieux, Pascal, 77940 Blenne (FR)
(74) Mandataire: Chaffraix, Jean

(56) Documents cités:
- FR-A- 2 779 467
- FR-A- 2 807 775
- FR-A- 2 809 125
- FR-A- 2 826 390
- FR-A- 2 841 923
- FR-A- 2 852 989
- FR-A- 2 874 040
- FR-A- 2 874 637
- FR-A- 2 914 967

## Description

La présente invention concerne un dispositif de support d'ossature de parement d'un bâtiment permettant de maintenir un produit d'isolation rigide.

La présente invention se rapporte au domaine de la construction de bâtiments, et plus particulièrement à l'installation concomitante de parements et de produits d'isolation thermique et/ou phonique préférentiellement lors de l'isolation de l'aménagement de combles. Elle concerne notamment l'installation de parements intérieurs, notamment de parements intérieurs en plaque de plâtre cartonné.

La présente invention vise en particulier le perfectionnement d'un dispositif de support d'une ossature de parement sur une paroi de bâtiment décrit dans le brevet FR 2874637. Un parement est une plaque de plâtre ou de bois ou de tout autre matériau approprié destinée à être installée sur une paroi parallèlement à celle-ci. La paroi peut être constituée par toute face de bâtiment telle qu'une face de mur, une face de charpente, de plafond ou un rampant de toiture. On appelle ossature de parement une pièce destinée à être solidarisée à un parement, qui reçoit et supporte ce parement. L'ossature de parement est fixée ou accrochée sur la paroi par l'intermédiaire d'un dispositif de fixation. Généralement, l'ossature de parement comporte un rail métallique, ou est un rail métallique.

Dans la technique habituelle, on utilise généralement comme article d'isolation thermique et/ou acoustique une ou plusieurs couches de laine minérale, ce matériau présentant l'avantage d'être facilement transpercé. Lorsque l'on veut installer un parement intérieur, sur une paroi, tout en intégrant un article d'isolation thermique et/ou acoustique tel qu'une ou plusieurs couches de laine minérale, on procède généralement de la manière suivante :
- on fixe tout d'abord sur la paroi des dispositifs de fixation de type classique, c'est-à-dire du type comportant une tige ou une broche,
- puis on applique contre la paroi ledit article d'isolation, qui se trouve transpercé par les dispositifs de fixation,
- puis on installe par emboîtement sur les extrémités libres des dispositifs de fixation une ossature de parement,
- puis on vient fixer le parement sur l'ossature par vissage à travers le parement et à travers l'article d'isolation.

Ainsi, l'article d'isolation se trouve pris en sandwich entre la paroi et le parement, et il est maintenu par les dispositifs de fixation.

Mais cette manière de procéder s'avère difficile à mettre en oeuvre lorsque l'article d'isolation thermique et/ou acoustique est constitué d'un matériau plus compact et/ou plus rigide qu'un matériau fibreux tel la laine minérale, et qui ne peut donc pas être transpercé aussi facilement que cette dernière. En effet, on tend à utiliser de plus en plus souvent des articles d'isolation tels que des plastiques alvéolaires dont les propriétés d'isolation thermique et/ou acoustique sont souvent meilleures que celles de la laine minérale.

On a donc proposé dans FR 2 874 637, un dispositif de support pour une ossature métallique de parement comportant un élément de fixation pour fixer le dispositif de support à la paroi à travers un article d'isolation préalablement mis en place sur la paroi et un élément de support pour porter l'ossature ainsi que des moyens de liaison entre ledit élément de fixation et ledit élément de support qui interdisent tout mouvement relatif de translation entre ces deux éléments. Ainsi, l'élément de fixation se présente sous la forme d'une tige filetée ayant une pointe auto-perforante pour sa fixation dans la paroi du bâtiment et dont l'extrémité opposée est pourvue d'une tête engageable réalisée dans un matériau non conducteur de la chaleur et du son, au travers d'un alésage ménagé dans l'élément de support limitant ainsi les déperditions thermiques par pont thermique et acoustique. Les moyens de liaison qui évitent la translation de l'un par rapport à l'autre sont constitués soit d'une collerette en saillie ménagée sur l'élément de fixation et logeable dans un logement approprié prévu dans l'élément de support soit sous forme d'une patte de l'élément de support articulée sur ledit support.

Un tel dispositif de support est donc particulièrement avantageux pour l'aménagement et l'isolation de rampant de comble de bâtiment. Il permet notamment de mettre en place sur des chevrons de charpente, lors de l'isolation de comble aménagé, un isolant en panneau rigide de type plastique alvéolaire (PSE, XPS, PUR) ou tout autre type de mousse ou de matériau isolant en panneau, qui soit beaucoup plus compact et rigide que la laine minérale, tout en utilisant un parement classique muni de son ossature associée, sans avoir à modifier ceux-ci. Un tel isolant rigide permet notamment grâce à une conductivité thermique plus faible que les laines minérales, soit d'augmenter la résistance thermique, soit de réduire l'épaisseur nécessaire par rapport à celles-ci. La résistance acoustique relativement faible de ces isolants rigides peut alors être avantageusement compensée par la mise en place d'une première couche d'isolant en laine minérale installée préalablement entre les chevrons.

L'utilisation de tels isolants rigides permet en outre de conférer à l'ensemble de l'isolation des rampants de toiture, une étanchéité à l'air supérieure à celle pouvant être obtenue avec des isolants fibreux traditionnels à la condition que la jonction entre panneaux isolants et avec la maçonnerie soit correctement réalisée à l'aide de mousse isolante et étanche à l'air, par exemple selon les règles de l'art. Toutefois ce type d'isolant rigide nécessite une fois mis en place d'être maintenu contre la charpente pour garantir dans le temps son efficacité, notamment d'étanchéité à l'air, face aux fortes sollicitations de pression d'air en toiture.

Ainsi, le dispositif de support tel que défini préalablement peut servir à une mise en place rapide et un maintien de panneaux de parement sur des panneaux isolants rigides déjà installés, par exemple par collage. En effet, l'élément de fixation se met facilement en place par vissage sur les chevrons au travers des panneaux d'isolant rigide déjà installés dessus. En outre, le dispositif de support permet de réduire substantiellement les ponts thermiques d'ossature métallique puisque le support de rail métallique est en un matériau polymère isolant thermiquement limitant ainsi les déperditions de chaleur par ponts thermiques.

Toutefois, il s'avère que, lors de la mise en place de ce dispositif de support, des décalages gênants peuvent survenir entre des éléments de supports, notamment en rénovation sur des charpentes irrégulières générant un désalignement du rail et donc au niveau des panneaux de parement. Le rattrapage d'un tel désalignement peut être effectué par un vissage plus ou moins profond de l'élément de fixation. Toutefois, il n'est pas toujours aisé de prévoir le vissage dudit élément de fixation qui sera nécessaire au rattrapage de faux aplomb avant que le rail ne soit lui-même fixé sur ledit élément de support. Par ailleurs, le dévissage peut engendre une rupture dans le maintien du panneau isolant contre la paroi sur laquelle il est appliqué.

Des dispositifs de supports de ce type sont déjà connus pour proposer un degré de réglage supplémentaire permettant un rattrapage.

Ainsi, dans FR 2 914 967, on propose un dispositif de support tel qu'une pince de fixation en prise sur l'élément allongé tel qu'une tige filetée dudit support de revêtement de plafond. Un tel dispositif est constitué d'une pièce profilée en forme de U à deux branches pouvant recevoir un rail et dont la semelle forme une première lame. Une seconde pièce profilée sous forme d'une lame flexible présente une partie formant une seconde lame et une partie arrière courbée constituant un organe élastique. Les pièces sont assemblées de sorte que les lames sont superposées, chacune étant munie d'un orifice à travers lequel est engageable la tige filetée. L'organe élastique est agencé pour exercer une contrainte sur la seconde lame provoquant un décalage de l'orifice de celle-ci par rapport à l'orifice de la première lame de sorte que le déplacement de la tige filetée est bloqué par un effet de cisaillement desdits orifices. On peut donc en actionnant l'organe élastique libérer la tige pour permettre un positionnement réglable de l'élément allongé sur la première pièce. Toutefois, il est difficile de mettre en oeuvre un tel dispositif car il est nécessaire de proposer un organe élastique qui reste facilement actionnable tout en proposant un effet de blocage suffisant sur la tige pour éviter un glissement de celle-ci et ce, sans provoquer un endommagement de la tige par l'effet de cisaillement.

Un tel degré d'ajustage a déjà été proposé également dans le document FR 2 852 989, dans lequel un système pour le maintien et le réglage de la distance à une paroi d'un profilé destiné à l'appui d'un parement comporte une tige montée sur une plaque de fixation à la paroi et présente une extrémité filetée opposée à la plaque de fixation. Sur cette extrémité filetée est vissée une platine et un cavalier pour recevoir le profilé, le vissage permettant l'adaptation de l'écart entre la paroi et le profilé. Par ailleurs, la platine et le cavalier définissent ensemble un orifice plus grand que la tige filetée de sorte qu'un réglage en translation des deux est possible sur la tige puis une fois la position déterminée, on visse le cavalier sur la platine pour la serrer, ce qui fixe l'ensemble sur la tige. Un tel dispositif de support demande donc une installation préalable des éléments de fixation avant la pose de l'isolant en matelas fibreux, ce qui peut s'avérer une opération longue et ne permet pas leur utilisation avec des panneaux d'isolation rigides ne pouvant être positionnés de manière satisfaisante sur ces fixations. De plus, le blocage de l'ensemble cavalier/platine intervenant par un vissage, un coulissement en translation de l'ensemble est toujours possible lors de ce vissage entraînant une imprécision dans le réglage du positionnement.

Dans FR 2 779 467 et FR 2 841 923, on propose un dispositif pour la pose d'un revêtement à distance d'une paroi, du type comprenant un élément support apte à venir en prise dans un profilé destiné à recevoir le revêtement et un autre élément support apte à venir en prise sur un autre profilé fixé à la paroi ou fixé directement dessus, les éléments supports étant reliés par une tige, des moyens étant prévus pour permettre le réglage en translation de la tige sans entraîner de mouvement de rotation. Ces moyens sont constitués d'un ressort plat logé dans l'un des éléments supports pourvu d'un alésage dans lequel se loge la tige, ledit ressort étant pourvu d'un orifice au travers duquel passe la tige. L'orifice du ressort est légèrement décalé par rapport à l'alésage de sorte qu'en position repos le ressort exerce un appui sur la tige avec un effet de cisaillement, une action sur le ressort annulant le cisaillement pour permettre le déplacement en translation de la tige.

Dans FR 2 809 125, on propose également un dispositif de support dans lequel la tige filetée s'engage au travers d'un orifice d'un élément de support de rail, ledit élément de support comportant une lame pourvu d'un orifice axialement et au travers duquel est engageable la tige, un organe élastique maintenant en position repos le bord de l'orifice de la lame en appui contre la tige pour la bloquer et ledit organe élastique actionné permettant le coulissement de l'élément support le long de la tige.

Dans FR 2 826 390, on propose un dispositif de fixation pourvu d'un support logé dans un rail fixé à une paroi et à partir duquel s'étend une tige portant à son autre extrémité un élément support pour recevoir un profilé de fixation d'un panneau de parement. Cet élément support comporte un élément de fixation sur la tige réglable le long de celle-ci et constitué de deux mâchoires propres à serrer entre elles la tige sous l'action d'un ressort.

Dans ces quatre derniers documents, sont décrits des dispositifs difficiles à mettre en oeuvre car il est nécessaire de proposer un organe flexible ou ressort qui reste facilement actionnable tout en proposant un effet de blocage suffisant sur la tige pour éviter un glissement de celle-ci sans provoquer un endommagement de la tige par l'effet de cisaillement. De plus, si l'effet de l'élastique se relâche, on risque un déplacement de la tige conduisant à un endommagement du support de parement.

Dans FR 2 807 775, il est proposé un dispositif de fixation comprenant un élément fixe préalablement solidarisé au mur ou plafond et comportant deux parties filetées, l'une permettant sa fixation dans le mur ou plafond et l'autre pouvant porter un support réglable par vissage sur ladite extrémité. Ce support porte ensuite un profilé. Ainsi, on peut ajuster la position du support de profilé par vissage de celui-ci sur l'extrémité filetée de l'élément fixe. Cependant, tel qu'il est configuré l'extrémité de la tige filetée vient en saillie à l'extrémité du taquet ce qui risque de provoquer un blocage lors de la mise en place du profilé ou rail dessus, celui-ci s'encliquetant sur des rainures ménagées du côté opposé de la face dans laquelle fait saillie la tige.
Par conséquent, la présente invention a pour but de proposer un perfectionnement du dispositif de support du type de celui décrit dans FR 2 874 637 dans lequel il existe un degré de réglage supplémentaire du rail une fois celui-ci vissé, pouvant être mis en place une fois l'article isolant installé tout en assurant une meilleure tenue des panneaux isolants contre la paroi et qui comporte en outre des moyens de réglage de l'élément de support par rapport à l'élément de fixation, de préférence même une fois le rail monté sur ledit élément de support et qui ne comporte aucune élément de fixation élastique ou flexible dont la force pourrait se relâcher au cours du temps ou qui pourrait également endommager l'élément de fixation.
A cet effet, l'invention a pour objet un dispositif de support d'une ossature de parement pour l'installation d'une ossature de parement sur une paroi de bâtiment tel que défini par la revendication 1, comportant -un élément de fixation pour fixer le dispositif de support à la paroi,-un élément de support pour supporter ladite ossature de parement,-des moyens de liaison entre ledit élément de fixation et ledit élément de support, interdisant tout mouvement relatif de translation entre ces deux éléments tout en autorisant de préférence un mouvement relatif de rotation entre ces deux éléments,les moyens de liaison étant constitués d'un alésage longitudinal de l'élément de support dans lequel est logeable l'élément de fixation présentant au moins une partie en relief,
caractérisé en ce que l'alésage longitudinal dudit élément de support est en outre conformé pour coopérer avec la ou lesdites parties en relief de l'élément de fixation, pour permettre le positionnement de l'élément de support par rapport à l'élément de fixation selon au moins deux positions distinctes,
L'alésage longitudinal de l'élément de support présente au moins deux tronçons de plus grand diamètre formant respectivement une cavité intérieure dudit élément de support tandis que l'élément de fixation comporte une partie en relief telle qu'en saillie radiale de l'élément de fixation, le logement de ladite partie en relief de l'élément de fixation dans l'une ou l'autre des cavités dudit alésage longitudinal, définissant ainsi au moins deux positions distinctes de l'élément de support sur l'élément de fixation, l'élément de support étant alors constitué de deux parties séparables telles qu'encliquetables qui, lorsqu'elles sont séparées telles que désencliquetées, permettent le logement de la partie en relief de l'élément de fixation dans au moins l'une des cavités de l'élément de support.

Ainsi, de manière avantageuse, il est possible d'ajuster la position relative entre l'élément de fixation et l'élément de support de manière à ajuster la position du rail monté sur l'élément de support tout en interdisant tout mouvement relatif de translation entre ces deux éléments.

Par parties en relief, on entend aussi bien un élément ménagé en saillie à la surface de l'élément de fixation qu'un creux ou évidement à ladite surface de l'élément de fixation.

L'élément de fixation comporte des moyens de fixation tels que des moyens de fixation par vissage comme par exemple une tige filetée ayant un axe longitudinal et une pointe auto-forante.

L'élément de support est quant à lui, constitué d'un corps profilé sur lequel l'ossature de parement tel qu'un rail est assemblée par emboîtement à force.

De préférence, la partie en relief de l'élément de fixation est constituée d'une collerette en saillie radiale sur l'élément de fixation tel qu'une tige.

Ainsi de manière avantageuse, on prévoit au moins deux cavités intérieures ou plus dans l'élément de support de sorte que l'élément de support peut être ajusté à plusieurs positions distinctes sur l'élément de fixation.

Selon une forme de réalisation, l'alésage longitudinal de l'élément de support présente au moins un tronçon de plus grand diamètre formant une cavité intérieure dudit élément de support, tandis que l'élément de fixation comporte une partie en relief tel qu'en saillie radiale de l'élément de fixation, destinée à se loger dans la cavité intérieure de l'élément de support, ledit élément de fixation étant constitué d'une tige filetée ayant un axe longitudinal et une pointe auto-forante, et présentant en outre un alésage taraudé dans lequel est engagée une deuxième tige filetée présentant la partie en relief.

Ainsi de manière avantageuse, une fois l'élément de fixation vissé dans le chevron par exemple au travers d'un panneau d'isolation rigide, on peut agir sur la deuxième tige filetée pour ajuster la position de l'élément de support, car les moyens de liaison entre l'élément de fixation et l'élément de support autorisent un mouvement relatif de rotation entre ces deux éléments. On peut prévoir plus d'une cavité dans l'élément de support de sorte qu'un tel dispositif présente deux degrés de réglage l'un par le positionnement de la partie en relief dans une des cavités de l'alésage de l'élément et l'autre par l'action sur la deuxième tige filetée.

Pour favoriser le maintien du panneau contre la paroi du bâtiment, on peut en outre prévoir que l'élément de fixation comporte une première partie de tige correspondant à la pointe auto-forante présentant un certain pas de vis puis une seconde partie de tige de diamètre plus grand que la première partie de tige et pourvue d'un pas de vis plus fin que le pas de vis de la pointe auto-forante.

Ainsi, de manière avantageuse, lors de l'engagement de l'élément de fixation au travers du panneau d'isolant rigide, la pointe auto-forante traverse le matériau pour venir s'ancrer ensuite par vissage dans un chevron tandis que la seconde partie de la tige de diamètre plus large et de pas de vis plus fin entraîne la compression du matériau contre le chevron du fait de la différence entre les pas de vis.

En variante, le dispositif de support selon l'invention comporte, en option, un élément de maintien qui coopère avec l'élément de fixation pour maintenir un article d'isolation thermique et/ou phonique contre la paroi du bâtiment.

De préférence, l'élément de maintien consiste en une pièce mobile dont la position peut être ajustée sur l'élément de fixation.

L'installation d'une ossature de parement s'effectue donc en appliquant en premier lieu l'article d'isolation contre la paroi. Puis, la fixation est réalisée par vissage de l'élément de fixation. On peut donc ainsi contrôler la profondeur de vissage, afin de régler la distance de l'ossature de parement par rapport à la paroi mais en outre on affine ce réglage à l'aide du dispositif perfectionné selon l'invention.

Lorsque le dispositif de support comporte un élément de maintien, l'installation d'une ossature de parement sur une paroi interne d'un bâtiment comporte, en outre, une étape au cours de laquelle on ajuste la position de l'élément de maintien sur l'élément de fixation, afin de maintenir l'article d'isolation contre la paroi.

On décrira maintenant l'invention plus en détail en référence au dessin dans lequel:

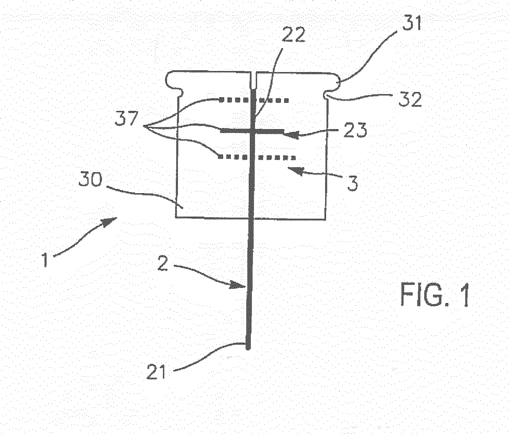

La figure 1 représente une vue en coupe schématique d'un dispositif de support selon une première forme de réalisation de l'invention ;
La figure 2 représente une vue en plan d'une forme particulière d'un élément de fixation du dispositif selon l'invention.

Un dispositif de support 1 d'une ossature de parement selon une première forme de réalisation de l'invention, comporte un élément de fixation 2 pour fixer le dispositif sur une paroi ainsi qu'un élément de support 3 pour porter l'ossature de parement.

L'élément de fixation 2 comporte une tige 20 de préférence filetée à pointe auto-forante 21 et pourvue d'un tête 22 comportant une empreinte permettant le vissage à l'aide d'un outil approprié. Cette tige 20 est de préférence en métal mais elle peut être en matériau non métallique et non conducteur de chaleur. Dans ce cas, elle peut avantageusement agir en tant qu'organe de rupture de pont thermique.

L'élément de support 3 comporte un corps profilé 30 se présentant sous la forme d'une pièce qui peut être plate ou globalement cylindrique avec un axe de révolution. Ce corps profilé 30 se termine sur la périphérie de l'une de ses extrémités par une partie 31 en saillie vers l'extérieur, qui est séparée du reste du corps par une rainure périphérique 32.

Le corps profilé 30 présente une forme et des dimensions sensiblement identiques à celui décrit dans FR2874637. Ainsi, le corps profilé 30 se présente sous la forme d'une pièce qui peut être plate ou globalement cylindrique avec un axe de révolution, selon le choix de fabrication. Le corps profilé 30 se termine sur la périphérie de l'une de ses extrémités par une partie 31 en saillie vers l'extérieur, qui est séparée du reste du corps 30 par une rainure périphérique 32. Le corps profilé 30 présente une forme et des dimensions qui le rendent apte à être utilisé avec une ossature de parement de la technique antérieure. Le corps profilé 30 peut être réalisé en métal, de préférence en métal résistant à la corrosion, ou soumis à un traitement de surface le protégeant contre la corrosion. En variante, le corps profilé 30 peut être réalisé en un matériau isolant thermiquement et/ou acoustiquement, comme par exemple en matière plastique ou polymère ou autre matériau capable de limiter les pertes de chaleur par conduction de pont thermique et/ou de limiter les sons par conduction des vibrations sonores. De telles propriétés du matériau permettent de répondre aux contraintes réglementaires qui s'avèrent de plus en plus exigeantes.

Le dispositif de support 1 comporte en outre des moyens de liaison qui sont constitués d'un alésage 4 ménagé longitudinalement dans l'élément de support 3 débouchant aux deux extrémités dudit élément de support 3 et dans lequel est introduit l'élément de fixation 2.

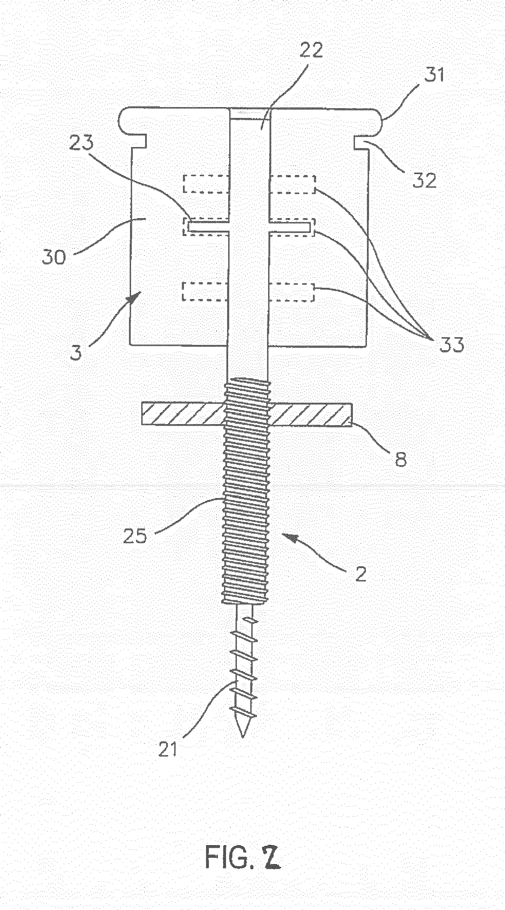

Cet alésage 4 comporte dans l'exemple représenté à la figure 2, trois tronçons de plus grand diamètre définissant trois cavités intérieures 33 dudit corps profilé 30.

L'élément de fixation comporte lui une partie en relief de la tige 20 qui se présente sensiblement sous la forme d'une collerette 23 et qui s'étend dans une directement perpendiculaire à la tige 20.

Le corps profilé 30 est en outre constitué de deux parties fixées l'une à l'autre et séparables, par exemple encliquetables et désencliquetables, de sorte que lors de l'ouverture du corps profilé 30, on peut choisir de mettre en place la collerette 23 dans l'une des cavités intérieures 33 dudit corps profilé 30 au choix pour ajuster l'élément de support 3 par rapport à l'élément de fixation 2.

Les dimensions et forme des cavités intérieures 33 et de la collerette 23 sont choisies pour permettre la rotation de la collerette 23 dans chacune des cavités 33, tout en interdisant le mouvement en translation du corps profilé 30 sur la tige 20 à l'exception d'un léger jeu fonctionnel.

Avec cet agencement de la première variante de réalisation, les déplacements relatifs des pièces sont les suivants :
- l'élément de fixation 20 est libre de tourner par rapport à l'élément de support 30, la collerette 23 étant libre de tourner dans la cavité intérieure,
- la présence de la collerette 23 et de la cavité intérieure 33 empêche toute translation relative de l'élément de fixation 20 par rapport à l'élément de support 30 le long de la direction axiale commune.

De cette manière, le vissage de l'élément de fixation 20 entraîne en translation axiale l'élément de support 30, qui peut ainsi être positionné par rapport à la paroi en fonction de la profondeur de vissage de l'élément de fixation 20. La pluralité de cavités intérieures permet de modifier si nécessaire la position relative de l'élément de fixation et de l'élément de support.

En variante, on peut envisager que l'élément de fixation 2, 200, 6, dans l'exemple représenté à la figure 7, l'élément de fixation 2, comporte une première partie de tige correspondant à la pointe auto-forante 21 présentant un certain pas de vis puis une seconde partie de tige 25 de diamètre supérieur à celui de la première partie de tige 21 et pourvue d'un pas de vis plus fin que le pas de vis de la pointe auto-forante 21.

Ainsi, lors de l'engagement de l'élément de fixation 2 au travers du panneau d'isolant rigide, la pointe auto-forante 21 traverse le matériau pour venir s'ancrer ensuite par vissage dans un chevron tandis que la seconde partie de la tige 25 de diamètre plus large et de pas de vis plus fin entraîne la compression du matériau contre le chevron du fait de la différence entre les pas de vis.

L'invention n'est bien entendu pas limitée aux exemples de réalisation mais englobe les variantes définies dans les revendications.

## Revendications

1. Dispositif de support d'une ossature de parement pour l'installation d'une ossature de parement sur une paroi de bâtiment, comportant
- un élément de fixation (2) pour fixer le dispositif de support à la paroi,
- un élément de support (3) pour supporter ladite ossature de parement,
- des moyens de liaison entre ledit élément de fixation (2) et ledit élément de support (3), interdisant tout mouvement relatif de translation entre ces deux éléments **caractérisé en ce que** tout en autorisant un mouvement relatif de rotation entre ces deux éléments, les moyens de liaison sont constitués d'un alésage longitudinal de l'élément de support (3) dans lequel est logeable l'élément de fixation (2) présentant au moins une partie en relief (23), l'alésage longitudinal dudit élément de support (3) étant en outre conformé pour coopérer avec la ou lesdites parties en relief (23) dudit élément de fixation (2) pour ajuster la position de l'élément de support (3) par rapport à l'élément de fixation (2) selon au moins deux positions distinctes, **en ce que** l'alésage longitudinal de l'élément de support (3) présente au moins deux tronçons de plus grand diamètre formant respectivement une cavité intérieure (33) dudit élément de support (3) tandis que l'élément de fixation (2) comporte une partie en relief (23), le logement de ladite partie en relief (23) de l'élément de fixation (2) dans l'une ou l'autre des cavités (33) dudit alésage longitudinal, définissant ainsi au moins deux positions distinctes de l'élément de support (3) sur l'élément de fixation (2), l'élément de support (3) étant alors constitué de deux parties séparables telles qu'encliquetables qui, lorsqu'elles sont séparées telles que désencliquetées, permettent le logement de la partie en relief (23) de l'élément de fixation (2) dans au moins l'une des cavités (33) de l'élément de support (3).

2. Dispositif selon la revendication 1,
**caractérisé en ce que** l'élément de fixation (2) comporte des moyens de fixation tels qu'une tige filetée ayant un axe longitudinal et une pointe auto-forante.

3. Dispositif selon l'une des revendications 1 et 2,
**caractérisé en ce que** l'élément de support (3) est quant à lui, constitué d'un corps profilé sur lequel l'ossature de parement tel qu'un rail est assemblée par emboîtement à force.

4. Dispositif selon l'une quelconque des revendications précédentes,
**caractérisé en ce que** la partie en relief de l'élément de fixation est constituée d'une collerette (23) en saillie de l'élément de fixation.

5. Dispositif selon l'une des revendications précédentes,
**caractérisé en ce que** l'alésage longitudinal de l'élément de support (300) présente au moins un tronçon de plus grand diamètre formant au moins une cavité intérieure (330) dudit élément de support (300), tandis que l'élément de fixation (2) comporte une partie en relief (23) destinée à se loger dans la cavité intérieure (330) de l'élément de support (300), ledit élément de fixation (200) étant constitué d'une tige filetée (201) ayant un axe longitudinal et une pointe auto-forante, et présentant en outre un alésage taraudé (202) dans lequel est engagée une deuxième tige filetée (203) présentant la partie en relief (330).

6. Dispositif selon l'une des revendications 2 à 5,
**caractérisé en ce que** l'élément de fixation (2, 200, 6) comporte une première partie de tige (21) correspondant à la pointe auto-forante présentant un certain pas de vis, puis une seconde partie de tige (25) de diamètre supérieur à celui de la première partie de tige (21) et pourvue d'un pas de vis plus fin que le pas de vis de la pointe auto-forante.

7. Dispositif selon l'une des revendications précédentes,
**caractérisé en ce que**, sur l'élément de fixation, est prévu un élément de maintien (8) à visser sur l'élément de fixation contre le panneau isolant rigide assurant un maintien par compression dudit isolant.

## Patentansprüche

1. Stützvorrichtung für eine Tragwerkverkleidung zur Installation einer Tragwerkverkleidung an einer Gebäudewand, die enthalt:
- ein Befestigungselement zur Befestigung der Stützvorrichtung an der Wand,
- ein Stützelement zum Stützen des Verkleidungstragwerks,
- Mittel zur Verbindung des besagten Befestigungselements und des besagten Stützelements, die bei Ermöglichung einer Drehbewegung zwischen den beiden Elementen eine relative Translationsbewegung zwischen diesen beiden Elementen verhindern, **dadurch gekennzeichnet, dass** die Verbindungsmittel aus einem Stützelement (3)mit Längsbohrung bestehen, in welche das Befestigungselement (2), das mindestens einen erhabenen Teil aufweist, aufgenommen werden kann,
- wobei die Längsbohrung des besagten Stützelements (3) des Weiteren so geformt ist, dass sie mit dem oder den erhabenen Teilen (23) des besagten Befestigungselements (2) zusammenwirkt, um das Stützelement (3) in Bezug auf das Befestigungselement (2) auf mindestens zwei unterschiedliche Positionen zu stellen, und dadurch, dass die Längsbohrung des Stützelements (3) mindestens zwei Abschnitte mit größerem Durchmesser aufweist, die jeweils einen Innenhohlraum (33) in besagtem Stützelement (3) bilden, während das Befestigungselement (2) einen erhabenen Teil (23) aufweist, wobei die Aufnahme des besagten erhabenen Teils (23) des Befestigungselements (2) in dem einen oder andern der Hohlräume (33) der besagten Längsbohrung somit mindestens zwei unterschiedliche Positionen des Stützelements (3) auf dem Befestigungselement (2) abgrenzt, wobei das Stützelement (3) aus zwei trennbaren, zum Beispiel einrastbaren Teilen besteht, die wenn sie getrennt, das heißt zum Beispiel ausgerastet werden, die Aufnahme des erhabenen Teils (23) des Befestigungselements (2) in mindestens einem der Hohlräume (33) des Stützelements (3) ermöglichen.

2. Vorrichtung nach Anspruch 1, **dadurch gekennzeichnet, dass** das Befestigungselement (2) Befestigungsmittel umfasst wie z.B. einen Gewindestab mit einer Längachse und einer Bohrspitze.

3. Vorrichtung nach einem der Ansprüche 1 und 2, **dadurch gekennzeichnet, dass** das Stützelement (3) aus einem Formkörper besteht, auf dem das Verkleidungstragwerk, wie zum Beispiel eine Schiene, im Presssitz montiert wird.

4. Vorrichtung nach einem der vorhergehenden Ansprüche, **dadurch gekennzeichnet, dass** der erhabene Teil des Befestigungselements aus einem vorstehenden Flansch (23) des Befestigungselements besteht.

5. Vorrichtung nach einem der vorhergehenden Ansprüche, **dadurch gekennzeichnet, dass** die Längsbohrung des Stützelements (300) mindestens einen Abschnitt mit größerem Durchmesser aufweist, der mindestens einen Innenhohlraum (330) im besagten Stützelement (300) bildet, während das Befestigungselement (2) einen erhabenen Teil (23) umfasst, der dazu bestimmt ist, im Innenhohlraum (330) des Stützelements (300) aufgenommen zu werden, wobei besagtes Befestigungselement (200) aus einem Gewindestab (201) mit einer Längsachse und einer Bohrspitze besteht, und des Weiteren eine Längsbohrung (202) aufweist, in die ein zweiter Gewindestab (203) eingeschoben wird, der den erhabenen Teil (330) bildet.

6. Vorrichtung nach einem der Ansprüche 2 bis 5, **dadurch gekennzeichnet, dass** das Befestigungselement (2, 200, 6) einen ersten Stababschnitt (21) bestehend aus der Bohrspitze mit einer bestimmten Gewindesteigung umfasst, und einen zweiten Stababschnitt (25), dessen Durchmesser größer ist als der des ersten Stababschnitts (21) und dessen Gewindesteigung schmäler ist als die der Bohrspitze.

7. Vorrichtung nach einem der vorhergehenden Ansprüche, **dadurch gekennzeichnet, dass** auf dem Befestigungselement ein Halteelement (8) vorgesehen ist, das auf dem Befestigungselement an der steifen Dämmplatte eingeschraubt wird und durch Druck auf die Dämmung für Halt sorgt.

## Claims

1. Device for supporting a cladding framework for installing a cladding framework on a building wall, comprising
- a fixing element (2) for fixing the support device to the wall,
- a support element (3) for supporting said cladding framework,
- means for connection between said fixing element (2) and said support element (3), preventing any relative translation movement between these two elements, **characterised in that**, while allowing a relative rotation movement between these two elements, the connection means consist of a longitudinal bore on the support element (3) in which the fixing element (2) can be housed, having at least one part in relief (23), the longitudinal bore on said support element (3) furthermore being conformed so as to cooperate with said part or parts in relief (23) of said fixing element (2) in order to adjust the position of the support element (3) with respect to the fixing element (2) according to at least two distinct positions, **in that** the longitudinal bore on the support element (3) has at least two portions with a larger diameter forming respectively an internal cavity (33) on said support element (3) while the fixing element (2) comprises a part in relief (23), the housing of said part in relief (23) of the fixing element (2) in one or other of the cavities (33) of said longitudinal bore thus defining at least two distinct positions of the support element (3) on the fixing element (2), the support element (3) then consisting of two separable parts such as ones that can be snapped together, which, when they are separated such as unsnapped, allow the housing of the part in relief (23) of the fixing element (2) in at least one of the cavities (33) of the support element (3),

2. Device according to claim 1, **characterised in that** the fixing element (2) comprises fixing means such as a threaded rod having a longitudinal axis and a self-tapping point.

3. Device according to either claim 1 or claim 2, **characterised in that** the support element (3) for its part consists of a profiled body on which the cladding framework such as a rail is assembled by force-fitting.

4. Device according to any of the preceding claims, **characterised in that** the part in relief of the fixing element consists of a collar (23) projecting from the fixing element.

5. Device according to any of the preceding claims, **characterised in that** the longitudinal bore on the support element (300) has at least one portion with a larger diameter forming at least one internal cavity (330) of said support element (300), while the fixing element (2) comprises a part in relief (23) intended to be housed in the internal cavity (330) of the support element (300), said fixing element (200) consisting of a threaded rod (201) having a longitudinal axis and a self-tapping point, and furthermore having a threaded bore (202) in which a second threaded rod (203) having the part in relief (330) is engaged.

6. Device according to any of claims 2 to 5, **characterised in that** the fixing element (2, 200, 6) comprises a first rod part (21) corresponding to the self-tapping point having a certain thread pitch, and then a second rod part (25) with a diameter greater than that of the first rod part (21) and provided with a finer thread pitch than the thread pitch of the self-tapping point.

7. Device according to any of the preceding claims, **characterised in that**, on the fixing element, a holding element (8) is provided for being screwed on to the fixing element against the rigid insulating panel providing holding by compression of said insulation.
